(19) **Europäisches Patentamt / European Patent Office / Office européen des brevets**

(11) **EP 3 110 631 B1**

(12) **FASCICULE DE BREVET EUROPEEN**

(45) Date de publication et mention de la délivrance du brevet:
**05.08.2020 Bulletin 2020/32**

(21) Numéro de dépôt: **15708777.6**

(22) Date de dépôt: **26.02.2015**

(51) Int Cl.:
*C01B 33/193* [(2006.01)]   *C09C 1/30* [(2006.01)]
*C08K 3/36* [(2006.01)]   *B60C 1/00* [(2006.01)]

(86) Numéro de dépôt international:
**PCT/EP2015/053992**

(87) Numéro de publication internationale:
**WO 2015/135758 (17.09.2015 Gazette 2015/37)**

(54) **PROCEDE DE PREPARATION DE SILICES PRECIPITEES, SILICES PRECIPITEES ET LEURS UTILISATIONS, NOTAMMENT POUR LE RENFORCEMENT DE POLYMERES**

VERFAHREN ZUR HERSTELLUNG VON FÄLLUNGSKIESELSÄURE, FÄLLUNGSKIESELSÄURE UND DEREN VERWENDUNG, INSBESONDERE ZUR VERSTÄRKUNG VON POLYMEREN

PROCESS FOR THE PREPARATION OF PRECIPITATED SILICAS, PRECIPITATED SILICAS AND THEIR USES, IN PARTICULAR FOR THE REINFORCEMENT OF POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2014 FR 1400513**

(43) Date de publication de la demande:
**04.01.2017 Bulletin 2017/01**

(73) Titulaire: **Rhodia Operations**
**93300 Aubervilliers (FR)**

(72) Inventeurs:
• **BOIVIN, Cédric**
 **F-69380 Chasselay (FR)**
• **GUY, Laurent**
 **F-69140 Rillieux-la-Pape (FR)**

• **PERIN, Eric**
 **F-69400 Villefranche Sur Saone (FR)**
• **LAMIRI, Kilani**
 **F-69210 L'Arbresle (FR)**

(74) Mandataire: **Ferri, Isabella**
**Solvay S.A.**
**Viale Lombardia, 20**
**20021 Bollate (MI) (IT)**

(56) Documents cités:
**EP-A1- 0 520 862   WO-A1-2014/033300**
**WO-A1-2014/033301   WO-A1-2014/033303**
**WO-A2-2011/121129   FR-A1- 2 886 285**
**FR-A1- 2 902 781**

**Description**

La présente invention concerne un nouveau procédé de préparation de silice précipitée, de nouvelles silices précipitées et leurs applications, telles que le renforcement des polymères.

Il est connu d'employer des charges blanches renforçantes dans les polymères, en particulier les élastomères, comme par exemple de la silice précipitée.

Le but de la présente invention est de proposer notamment une charge alternative pour les compositions de polymères leur procurant de manière avantageuse une réduction de leur viscosité et une amélioration de leurs propriétés dynamiques tout en conservant leurs propriétés mécaniques. Elle permet ainsi de manière avantageuse une amélioration du compromis hystérèse/renforcement.

La présente invention propose tout d'abord un nouveau procédé de préparation de silice précipitée mettant en œuvre, au cours de ou après l'opération de délitage, au moins un acide polycarboxylique.

L'utilisation d'acide carboxylique lors de la préparation de silice précipitée à faible reprise en eau, utilisable notamment comme charge renforçante dans les matrices silicones, est décrit dans FR2886285A1. FR2886285A1 ne décrit pas une silice selon la revendication 1 ni le procédé pour sa préparation.

De manière générale, la préparation de silice précipitée s'effectue par réaction de précipitation d'un silicate, tel qu'un silicate de métal alcalin (silicate de sodium par exemple), avec un agent acidifiant (acide sulfurique par exemple), puis séparation par filtration, avec obtention d'un gâteau de filtration, de la silice précipitée obtenue, ensuite délitage dudit gâteau de filtration et enfin séchage (généralement par atomisation). Le mode de précipitation de la silice peut être quelconque : notamment, addition d'agent acidifiant sur un pied de cuve de silicate, addition simultanée totale ou partielle d'agent acidifiant et de silicate sur un pied de cuve d'eau ou de silicate.

Un procédé de préparation d'une silice précipitée, du type comprenant la réaction de précipitation entre un silicate et un agent acidifiant, est décrit dans EP520862A1, qui ne décrit pas l'utilisation d'un acide polycarboxylique dans le procédé.

L'un des objets de l'invention est un nouveau procédé de préparation d'une silice précipitée du type comprenant la réaction de précipitation entre un silicate et un agent acidifiant ce par quoi l'on obtient une suspension de silice précipitée, puis la séparation et le séchage de cette suspension, caractérisé en ce qu'il comprend les étapes successives suivantes :

- on réalise la réaction de précipitation de la manière suivante :

  (i) on forme un pied de cuve initial comportant au moins une partie de la quantité totale du silicate engagé dans la réaction et un électrolyte, la concentration en silicate (exprimée en $SiO_2$) dans ledit pied de cuve initial étant comprise entre 50 et 70 g/L,
  (ii) on ajoute l'agent acidifiant audit pied de cuve jusqu'à l'obtention d'une valeur du pH du milieu réactionnel comprise entre 7,0 et 8,5,
  (iii) on ajoute au milieu réactionnel de l'agent acidifiant et, le cas échéant, simultanément la quantité restante du silicate,

- la séparation comprend une filtration et un lavage au moyen d'un filtre équipé d'un moyen de compactage,
- on soumet le gâteau de filtration obtenu à l'issue de la filtration à une opération de délitage,
- on sèche par atomisation une suspension, de préférence présentant un taux de matière sèche d'au plus 23 %,

ledit procédé étant caractérisé en ce qu'on ajoute au gâteau de filtration, soit au cours de l'opération de délitage, soit après l'opération de délitage et avant l'étape de séchage, au moins un acide polycarboxylique (par exemple un mélange d'acides polycarboxyliques) choisi parmi les acides polycarboxyliques linéaires ou ramifiés, saturés ou insaturés, aliphatiques ayant de 2 à 20 atomes de carbone ou aromatiques.

L'opération de délitage est une opération de fluidification ou liquéfaction, dans laquelle le gâteau de filtration est rendu liquide, la silice précipitée se retrouvant en suspension.

Selon un premier mode de réalisation de l'invention, le gâteau de filtration est soumis à une opération de délitage pendant laquelle ou après laquelle est introduit au moins un acide polycarboxylique. Le mélange alors obtenu (suspension de silice précipitée) est ensuite séché (généralement par atomisation).

Dans une première variante de ce mode de réalisation, cette opération de délitage est réalisée en soumettant le gâteau de filtration à une action chimique par addition d'au moins un acide polycarboxylique, de préférence couplée à une action mécanique (par exemple par passage dans un bac agité en continu ou dans un broyeur de type colloïdal) qui induit habituellement une réduction granulométrique de la silice en suspension. La suspension (en particulier aqueuse) obtenue après délitage présente une viscosité relativement faible.

Dans une seconde variante de ce premier mode de réalisation, cette opération de délitage est réalisée en soumettant le gâteau de filtration à une action mécanique (par exemple par passage dans un bac agité en continu ou dans un broyeur de type colloïdal) qui induit habituellement une réduction granulométrique de la silice en suspension.

Dans cette seconde variante, on ajoute au moins un acide polycarboxylique après l'opération de délitage, c'est-à-dire au gâteau de silice délité.

Selon un second mode de réalisation préféré de l'invention, l'opération de délitage comprend l'addition d'au moins un (en général un) composé de l'aluminium.

Ainsi, selon ce second mode de réalisation de l'invention, le gâteau de filtration est soumis à une opération de délitage pendant laquelle sont introduits au moins un composé de l'aluminium et au moins un acide polycarboxylique, ou après laquelle est introduit au moins un acide polycarboxylique. Le mélange alors obtenu (suspension de silice précipitée) est ensuite séché (généralement par atomisation).

Dans deux premières variantes de ce second mode de réalisation de l'invention, cette opération de délitage est réalisée en soumettant le gâteau de filtration à une action chimique par addition d'au moins un composé de l'aluminium, par exemple de l'aluminate de sodium, et d'au moins un acide polycarboxylique, de préférence couplée à une action mécanique (par exemple par passage dans un bac agité en continu ou dans un broyeur de type colloïdal) qui induit habituellement une réduction granulométrique de la silice en suspension. La suspension (en particulier aqueuse) obtenue après délitage présente une viscosité relativement faible.

Dans la première variante de ce mode de réalisation, au cours de l'opération de délitage, au moins un composé d'aluminium et au moins un acide polycarboxylique sont simultanément ajoutés (co-addition) au gâteau de filtration.

Dans la deuxième variante de ce mode de réalisation, au cours de l'opération de délitage, au moins un composé d'aluminium est ajouté au gâteau de filtration préalablement à l'ajout d'au moins un acide polycarboxylique.

Dans une troisième variante de ce second mode de réalisation, cette opération de délitage est réalisée en soumettant le gâteau de filtration à une action chimique par addition d'au moins un composé de l'aluminium, par exemple de l'aluminate de sodium, de préférence couplée à une action mécanique (par exemple par passage dans un bac agité en continu ou dans un broyeur de type colloïdal) qui induit habituellement une réduction granulométrique de la silice en suspension.

Dans cette troisième variante, on ajoute au moins un acide polycarboxylique après l'opération de délitage, c'est-à-dire au gâteau de silice délité.

Selon l'invention, le gâteau de filtration devant être soumis à l'opération de délitage peut être composé du mélange de plusieurs gâteaux de filtration, chacun desdits gâteaux étant obtenu par filtration d'une partie de la suspension de silice obtenue préalablement (cette suspension étant, préalablement à la filtration, fractionnée en plusieurs parties).

Selon l'invention, on entend par « acide polycarboxylique » des acides polycarboxyliques comprenant au moins deux groupes fonctionnels acide carboxylique. L'expression « groupe fonctionnel acide carboxylique » est prise ici dans son sens habituel et se réfère au groupe fonctionnel -COOH.

L'acide polycarboxylique employé selon l'invention peut avoir deux, trois, quatre ou plus de quatre groupes fonctionnels acide carboxylique.

Selon l'invention, l'acide polycarboxylique est de préférence choisi parmi les acides dicarboxyliques et les acides tricarboxyliques.

Selon l'invention, l'acide polycarboxylique employé peut être un acide polycarboxylique linéaire ou ramifié, saturé ou insaturé, aliphatique ayant de 2 à 20 atomes de carbone ou aromatique. L'acide polycarboxylique peut éventuellement comprendre des groupes hydroxyles et/ou des atomes d'halogène. L'acide polycarboxylique aliphatique peut éventuellement comprendre des hétéroatomes sur la chaîne principale, par exemple N, S. Généralement, l'acide polycarboxylique employé selon l'invention est choisi dans le groupe constitué par les acides polycarboxyliques aliphatiques linéaires ou ramifiés, saturés ou insaturés ayant de 2 à 16 atomes de carbone et les acides polycarboxyliques aromatiques.

Parmi les acides polycarboxyliques aliphatiques, on peut mentionner les acides polycarboxyliques linéaires, saturés ou insaturés, ayant de 2 à 14 atomes de carbone, de préférence de 2 à 12 atomes de carbone. L'acide polycarboxylique employé peut avoir 2, 3, 4, 5, 6, 7, 8, 9, 10, 11 ou 12 atomes de carbone. De manière avantageuse, l'acide polycarboxylique employé peut avoir 4, 5, 6, 7, 8, 9 ou 10 atomes de carbone, de préférence 4, 5, 6, 7 ou 8 atomes de carbone. Par exemple, l'acide polycarboxylique employé peut avoir 4, 5 ou 6 atomes de carbone.

Notamment, on peut citer comme exemples non limitatifs d'acides polycarboxyliques aliphatiques linéaires utilisés dans l'invention les acides choisis dans le groupe constitué par l'acide oxalique, l'acide malonique, l'acide tricarballylique, l'acide succinique, l'acide glutarique, l'acide adipique, l'acide pimélique, l'acide subérique, l'acide azélaïque, l'acide sébacique.

Parmi les acides polycarboxyliques ramifiés, on peut citer l'acide méthylsuccinique, l'acide éthylsuccinique, l'acide oxalosuccinique, l'acide méthyladipique, l'acide méthylglutarique, l'acide diméthylglutarique. Par acide méthylglutarique on entend à la fois l'acide 2-méthylglutarique et l'acide 3-méthylglutarique ainsi que le mélange de ces deux isomères en toutes proportions. L'expression « acide 2-méthylglutarique » est utilisée pour indiquer aussi bien les formes (S) et (R) du composé que le mélange racémique.

Parmi les acides polycarboxyliques insaturés, on peut citer l'acide maléique, l'acide fumarique, l'acide itaconique, l'acide muconique, l'acide aconitique, l'acide traumatique et l'acide glutaconique.

Parmi les acides polycarboxyliques comprenant des groupes hydroxyles, on peut citer l'acide malique, l'acide citrique, l'acide isocitrique et l'acide tartarique.

Parmi les acides polycarboxyliques aromatiques, on peut mentionner les acides phtaliques, à savoir l'acide phtalique, l'acide orthophtalique, l'acide isophtalique, l'acide trimésique et l'acide trimellitique.

De préférence, l'acide polycarboxylique employé dans le procédé selon l'invention est choisi dans le groupe constitué par l'acide oxalique, l'acide malonique, l'acide tricarballylique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique.

De préférence, les acides dicarboxyliques et tricarboxyliques sont choisis parmi l'acide adipique, l'acide succinique, l'acide éthylsuccinique, l'acide glutarique, l'acide méthylglutarique, l'acide oxalique, l'acide citrique.

L'acide polycarboxylique peut également être choisi dans le groupe constitué par l'acide oxalique, l'acide malonique, l'acide tricarballyique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique. De préférence, l'acide polycarboxylique peut être choisi dans le groupe constitué par l'acide oxalique, l'acide malonique, l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide isocitrique, l'acide tartarique. De manière très préférée, l'acide polycarboxylique peut être choisi dans le groupe constitué par l'acide succinique, l'acide glutarique, l'acide adipique, l'acide pimélique, l'acide subérique, l'acide azélaïque, l'acide sébacique, l'acide méthylsuccinique, l'acide éthylsuccinique, l'acide méthyladipique, l'acide méthylglutarique, l'acide diméthylglutarique, l'acide malique, l'acide citrique, l'acide tartarique.

Dans un premier mode de réalisation de l'invention, on ajoute un unique acide polycarboxylique au gâteau de filtration.

De préférence, l'acide polycarboxylique est alors l'acide succinique.

De manière préférée, lorsque l'acide polycarboxylique est l'acide succinique, il est ajouté au gâteau de filtration après l'opération de délitage.

Dans un second mode de réalisation préféré de l'invention, on ajoute un mélange d'acides polycarboxyliques au gâteau de filtration, ledit mélange comprenant au moins deux acides polycarboxyliques tels que définis ci-dessus. Le mélange peut comprendre deux, trois, quatre ou plus de quatre acides polycarboxyliques.

De préférence, les acides polycarboxyliques du mélange sont alors choisis parmi l'acide adipique, l'acide succinique, l'acide éthylsuccinique, l'acide glutarique, l'acide méthylglutarique, l'acide oxalique, l'acide citrique.

Selon l'invention, le mélange d'acides polycarboxyliques est de préférence un mélange d'acides dicarboxyliques et/ou tricarboxyliques, notamment un mélange d'au moins deux, de préférence d'au moins trois acides dicarboxyliques et/ou tricarboxyliques, en particulier un mélange de trois acides dicarboxyliques et/ou tricarboxyliques.

De manière préférée, le mélange d'acides polycarboxyliques est un mélange d'acides dicarboxyliques, notamment un mélange d'au moins trois acides dicarboxyliques, en particulier un mélange de trois acides dicarboxyliques. En général le mélange consiste en trois acides dicarboxyliques, bien que des impuretés puissent être présentes en une quantité n'excédant pas généralement 2,00 % en poids du mélange total.

Selon une variante préférée de l'invention, le mélange d'acides polycarboxyliques utilisé dans l'invention comprend les acides suivants : acide adipique, acide glutarique et acide succinique. Par exemple, le mélange d'acides polycarboxyliques comprend 15,00 à 35,00 % en poids d'acide adipique, 40,00 à 60,00 % en poids d'acide glutarique et 15,00 à 25,00 % en poids d'acide succinique.

Le mélange d'acides polycarboxyliques selon cette première variante préférée de l'invention peut être issu d'un procédé de fabrication de l'acide adipique.

Selon une autre variante préférée de l'invention, le mélange d'acides polycarboxyliques utilisé dans l'invention comprend les acides suivants : acide méthylglutarique, acide éthylsuccinique et acide adipique. Les trois acides peuvent être présents dans le mélange en toutes proportions. Par exemple, le mélange d'acides polycarboxyliques comprend 60,00 à 96,00 % en poids d'acide méthylglutarique, 3,90 à 20,00 % en poids d'acide éthylsuccinique et 0,05 à 20,00 % en poids d'acide adipique.

Le mélange d'acides polycarboxyliques selon cette seconde variante préférée de l'invention peut être issu d'un procédé de fabrication de l'acide adipique.

De manière avantageuse, le mélange d'acides polycarboxyliques selon cette seconde variante préférée de l'invention peut être obtenu par hydrolyse acide, de préférence par hydrolyse basique, d'un mélange de méthylglutaronitrile, d'éthylsuccinonitrile et d'adiponitrile issu du procédé de fabrication de l'adiponitrile par hydrocyanation du butadiène, l'adiponitrile étant un intermédiaire important pour la synthèse de l'hexaméthylène diamine.

Une partie ou la totalité de l' (des) acide(s) polycarboxylique(s), en particulier acides dicarboxyliques et/ou tricarboxyliques, employé(s) selon l'invention peut être sous forme de dérivé d'acide carboxylique, à savoir sous la forme d'anhydride, d'ester, de sel (carboxylate) de métal alcalin (par exemple de sodium ou de potassium), de sel (carboxylate) de métal alcalino-terreux (par exemple de calcium) ou de sel (carboxylate) d'ammonium. Le terme « carboxylate » sera utilisé ci-après pour désigner les dérivés des groupes fonctionnels acide carboxylique tels que définis précédemment.

Par exemple, le mélange d'acides polycarboxyliques peut être un mélange comprenant :

- de l'acide méthylglutarique (en particulier de 60,00 à 96,00 % en poids, par exemple de 90,00 à 95,50 % en poids),
- de l'anhydride éthylsuccinique (en particulier de 3,90 à 20,00 % en poids, par exemple de 3,90 à 9,70 % en poids),
- de l'acide adipique (en particulier de 0,05 à 20,00 % en poids, par exemple de 0,10 à 0,30 % en poids).

Le mélange d'acides polycarboxyliques peut également être un mélange comprenant :

- de l'acide méthylglutarique (en particulier de 10,00 à 50,00 % en poids, par exemple de 25,00 à 40,00 % en poids),
- de l'anhydride méthylglutarique (en particulier de 40,00 à 80,00 % en poids, par exemple de 55,00 à 70,00 % en poids),
- de l'anhydride éthylsuccinique (en particulier de 3,90 à 20,00 % en poids, par exemple de 3,90 à 9,70 %),
- de l'acide adipique (en particulier de 0,05 à 20,00 % en poids, par exemple de 0,10 à 0,30 % en poids).

Les mélanges utilisés selon l'invention peuvent éventuellement contenir des impuretés.

Les acides polycarboxyliques utilisés dans l'invention peuvent éventuellement être préneutralisés (notamment en les prétraitant avec une base, par exemple de type soude ou potasse) avant leur ajout au gâteau de filtration. Cela permet notamment de modifier le pH de la silice obtenue.

Les acides polycarboxyliques peuvent être employés sous forme de solution aqueuse.

De préférence, le composé de l'aluminium employé dans le second mode de réalisation de l'invention est choisi parmi les aluminates de métal alcalin. En particulier, le composé de l'aluminium est l'aluminate de sodium.

Selon l'invention, la quantité de composé de l'aluminium (en particulier l'aluminate de sodium) utilisé est généralement telle que le rapport composé de l'aluminium / quantité de silice exprimée en $SiO_2$ contenue dans le gâteau de filtration est compris entre 0,20 et 0,50 % en poids, de préférence entre 0,25 et 0,45 % en poids.

La quantité d'acide(s) polycarboxylique(s) employée est en général telle que le rapport acide(s) polycarboxylique(s) / quantité de silice exprimée en $SiO_2$ contenue dans le gâteau de filtration (au moment de l'ajout d'au moins un acide polycarboxylique) est compris entre 0,50 et 2,00 % en poids, de préférence entre 0,55 et 1,75 % en poids, en particulier entre 0,60 et 1,20 % en poids, par exemple entre 0,65 et 1,25 % en poids.

Dans l'invention, le gâteau de filtration peut éventuellement être lavé.

La mise en œuvre, au cours de ou après l'opération de délitage, d'un mélange d'acides polycarboxyliques et la succession d'étapes particulières, et en particulier une concentration relativement faible en silicate exprimée en $SiO_2$ dans le pied de cuve initial, combinée à l'utilisation d'un filtre équipé d'un moyen de compactage et à un taux approprié de matière sèche de la suspension à sécher, confère aux produits obtenus leurs caractéristiques et propriétés particulières.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut utiliser en tant que silicate toute forme courante de silicates tels que les métasilicates, disilicates et avantageusement un silicate de métal alcalin notamment le silicate de sodium ou de potassium.

Le silicate peut présenter une concentration (exprimée en $SiO_2$) comprise entre 40 et 330 g/l, par exemple entre 60 et 300 g/l, en particulier entre 60 et 260 g/l.

De manière préférée, on emploie, comme agent acidifiant, l'acide sulfurique et, comme silicate, le silicate de sodium.

Dans le cas où l'on utilise le silicate de sodium, celui-ci présente, en général, un rapport pondéral $SiO_2/Na_2O$ compris entre 2,0 et 4,0, en particulier entre 2,4 et 3,9, par exemple entre 3,1 et 3,8.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

Selon une caractéristique du procédé de préparation de l'invention, la concentration en silicate dans le pied de cuve initial, exprimée en équivalent $SiO_2$, est comprise entre 50 et 70 g/l, par exemple entre 55 et 65 g/l. De préférence, cette concentration est comprise entre 50 et 65 g/l, en particulier comprise entre 50 et 60 g/l.

Le pied de cuve initial formé dans l'étape (i) contient un électrolyte. Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Si l'électrolyte employé est du sulfate de sodium, sa concentration dans le pied de cuve initial est comprise, de préférence, entre 12 et 20 g/l, en particulier entre 13 et 18 g/l.

La deuxième étape (étape (ii)) consiste à ajouter l'agent acidifiant dans le pied de cuve de composition décrite plus haut.

Cette addition qui entraîne une baisse corrélative du pH du milieu réactionnel se fait jusqu'à ce qu'on atteigne une valeur du pH comprise entre 7,0 et 8,5, notamment entre 7,0 et 8,0, par exemple entre 7,5 et 8,0.

Une fois qu'est atteinte la valeur souhaitée de pH, on procède alors à la troisième étape (étape (iii)).

Dans le cas (préféré) d'un pied de cuve de départ ne comprenant qu'une partie de la quantité totale de silicate engagé dans la réaction, on procède, dans l'étape (iii), à une addition simultanée d'agent acidifiant et de la quantité restante de silicate.

Cette addition simultanée est de préférence réalisée de manière telle que la valeur du pH soit constamment égale (à +/- 0,2 près) à celle atteinte à l'issue de l'étape (ii).

En général, dans une étape suivante, on ajoute au milieu réactionnel une quantité supplémentaire d'agent acidifiant, de préférence jusqu'à l'obtention d'une valeur du pH du milieu réactionnel comprise entre 4,0 et 6,0, en particulier entre 4,5 et 5,5.

Il peut être alors avantageux d'effectuer, après cette addition d'une quantité supplémentaire d'agent acidifiant, un mûrissement du milieu réactionnel, ce mûrissement pouvant par exemple durer de 1 à 30 minutes, notamment de 2 à 15 minutes.

Dans le cas d'un pied de cuve de départ comprenant la quantité totale du silicate engagé dans la réaction, on procède, dans l'étape (iii), à une addition d'agent acidifiant, de préférence jusqu'à l'obtention d'une valeur du pH du milieu réactionnel comprise entre 4,0 et 6,0, en particulier entre 4,5 et 5,5.

Il peut être également alors avantageux d'effectuer, après cette étape (iii), un mûrissement du milieu réactionnel, ce mûrissement pouvant par exemple durer de 1 à 30 minutes, notamment de 2 à 15 minutes.

L'enceinte réactionnelle dans laquelle est mis en œuvre l'ensemble de la réaction du silicate avec l'agent acidifiant est habituellement muni d'un équipement d'agitation et d'un équipement de chauffage adéquats.

La température du milieu réactionnel est généralement comprise entre 68 et 98 °C.

L'ensemble de la réaction du silicate avec l'agent acidifiant est généralement réalisé entre 70 et 95 °C, en particulier entre 75 et 95 °C.

Selon une variante de l'invention, l'ensemble de la réaction du silicate avec l'agent acidifiant est effectué à une température constante, de préférence comprise entre 75 et 95 °C.

Selon une autre variante de l'invention, la température de fin de réaction est plus élevée que la température de début de réaction : ainsi, on maintient la température au début de la réaction (par exemple au cours des étapes (i) et (ii)) de préférence entre 68 et 85 °C, puis on augmente la température, de préférence jusqu'à une valeur comprise entre 85 et 98 °C, valeur à laquelle elle est maintenue jusqu'à la fin de la réaction.

On obtient, à l'issue des étapes qui viennent d'être décrites, une bouillie de silice qui est ensuite séparée (séparation liquide-solide).

Selon une autre caractéristique du procédé de préparation de l'invention, ladite séparation comprend une filtration et un lavage à l'aide d'un filtre équipé d'un moyen de compactage, la pression de compactage étant de préférence faible.

Ce filtre peut être un filtre à bande équipé d'un rouleau assurant le compactage.

Néanmoins, de préférence, la séparation comprend une filtration, un lavage puis un compactage, au moyen d'un filtre presse ; en général, la pression en fin de filtration est comprise entre 3,5 et 6,0 bars, la durée de compactage étant par exemple d'au moins 20 secondes, notamment d'au moins 30 secondes.

Le gâteau de filtration est alors soumis à une opération de délitage. Conformément à l'exposé ci-dessus, on ajoute au moins un acide polycarboxylique au cours de ou après l'opération de délitage.

Le gâteau de filtration délité est ensuite séché par atomisation.

Dans le procédé de préparation de l'invention, cette suspension doit présenter immédiatement avant son séchage par atomisation un taux de matière sèche d'au plus 23 % en masse. Ce taux de matière sèche est de préférence d'au plus 22 % en masse, en particulier d'au plus 20 % en masse, par exemple d'au plus 18 % en masse. Il peut être inférieur à 17 % en masse.

Il est à noter que l'on peut en outre, après la filtration, à une étape ultérieure du procédé, rajouter au gâteau de filtration de la matière sèche, par exemple de la silice conforme à l'invention sous forme pulvérulente.

Le séchage peut être mis en œuvre au moyen de tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Selon un mode préféré de réalisation de l'invention, le séchage est effectué à l'aide d'un atomiseur à buses. La silice précipitée susceptible d'être alors obtenue se présente avantageusement sous forme de billes sensiblement sphériques. A l'issue de ce séchage, on peut éventuellement procéder à une étape de broyage sur le produit récupéré ; la silice précipitée susceptible d'être alors obtenue se présente généralement sous forme d'une poudre.

De même, selon un autre mode de réalisation de l'invention, le séchage est effectué à l'aide d'un atomiseur à turbines. La silice précipitée susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. Lorsqu'on met en œuvre cette dernière technique, il peut s'avérer opportun, avant de procéder au compactage, de désaérer (opération appelée également prédensification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

L'invention est également relative aux silices précipitées obtenues ou susceptibles d'être obtenues par le procédé selon l'invention.

En général ces silices précipitées présentent à leur surface des molécules de l' (des) acide(s) polycarboxylique(s) employé(s) et/ou du (des) carboxylate(s) correspondant à l' (aux) acide(s) polycarboxylique(s) employé(s).

La présente invention a en outre pour objet une silice précipitée aux caractéristiques particulières, notamment utilisable comme charge alternative pour les compositions de polymères leur procurant de manière avantageuse une réduction de leur viscosité et une amélioration de leurs propriétés dynamiques tout en conservant leurs propriétés mécaniques.

Dans l'exposé qui suit, la surface spécifique BET est déterminée selon la méthode de BRUNAUER - EMMET - TELLER décrite dans « The Journal of the American Chemical Society », Vol. 60, page 309, février 1938 et correspondant à la norme NF ISO 5794-1 annexe D (juin 2010). La surface spécifique CTAB est la surface externe, pouvant être déterminée selon la norme NF ISO 5794-1 annexe G (juin 2010).

La teneur en acide polycarboxylique + carboxylate correspondant notée (C), exprimée en carbone total, peut être mesurée à l'aide d'un analyseur carbone soufre comme l'Horiba EMIA 320 V2. Le principe de l'analyseur carbone soufre est basé sur la combustion d'un échantillon solide dans un flux d'oxygène dans un four à induction (réglé à environ 170 mA) et en présence d'accélérateurs de combustion (environ 2 grammes de tungstène (en particulier Lecocel 763-266) et environ 1 gramme de fer). L'analyse dure environ 1 minute.

Le carbone contenu dans l'échantillon à analyser (masse d'environ 0,2 gramme) se combine avec l'oxygène pour former $CO_2$, CO. On analyse ensuite ces gaz de décomposition par un détecteur infrarouge.

L'humidité de l'échantillon et l'eau produite lors de ces réactions d'oxydation est éliminée par passage sur une cartouche contenant un agent déshydratant : le perchlorate de magnésium afin de ne pas interférer sur la mesure infrarouge.

Le résultat est exprimé en pourcentage massique en élément Carbone.

En fonction de la source des matières premières utilisées pour le silicate, les silices précipitées selon l'invention peuvent contenir des éléments supplémentaires, tels que par exemple des métaux. Parmi lesdits éléments supplémentaires, on peut citer l'aluminium. La teneur en aluminium correspondante est alors en général inférieure à 1200 ppm, de préférence inférieure à 700 ppm, en particulier inférieure à 600 ppm, de manière plus préférée inférieure à 500 ppm.

La teneur en aluminium notée (Al) peut être déterminée par Fluorescence X dispersif en longueur d'onde par exemple avec un spectromètre Panalytical 2400 ou, de préférence, avec un spectromètre Panalytical MagixPro PW2540. Le principe de la méthode de mesure par Fluorescence X est le suivant :

- un broyage de la silice est nécessaire quand elle se présente sous forme de billes sensiblement sphériques (microperles) ou de granulés, jusqu'à l'obtention d'une poudre homogène. Le broyage peut être réalisé avec un mortier en agate (broyage de 15 grammes de silice environ pendant une durée de 2 minutes) ou tout type de broyeur ne contenant pas d'aluminium,
- la poudre est analysée telle quelle dans une cuve de 40 mm de diamètre avec un film de polypropylène de 6 $\mu$m, sous atmosphère d'hélium, à un diamètre d'irradiation de 37 mm, et la quantité de silice analysée est de 9 cm³. La mesure de la teneur en aluminium, qui nécessite au maximum 5 minutes, est obtenue à partir de la raie K$\alpha$ (angle

2θ = 145°, cristal PE002, collimateur 550 μm, détecteur flux gazeux, tube en rhodium, 32 kV et 125 mA). L'intensité de cette raie est proportionnelle à la teneur en aluminium. On peut employer un étalonnage préalable réalisé au moyen d'une autre méthode de mesure, telle que l'ICP-AES (" Inductively Coupled Plasma - Atomic Emission Spectroscopy ").

La teneur en aluminium peut également être mesurée par toute autre méthode convenable, par exemple par ICP-AES après mise en solution dans l'eau en présence d'acide fluorhydrique.

La présence d'acide(s) polycarboxylique(s) sous la forme acide et/ou sous la forme carboxylate peut être établie par Infrarouge de surface ou ATR-diamant (Attenuated Total Reflection).

L'analyse Infrarouge de surface (par transmission) est réalisée sur un spectromètre Bruker Equinoxe 55 sur une pastille de produit pur. La pastille est obtenue après broyage de la silice telle quelle dans un mortier en agate et pastillage à 2 T/cm$^2$ pendant 10 secondes. Le diamètre de la pastille est de 17 mm. Le poids de la pastille est entre 10 et 20 mg. La pastille ainsi obtenue est placée dans l'enceinte sous vide secondaire (10$^{-7}$ mbar) du spectromètre pendant une heure à température ambiante avant l'analyse par transmission. L'acquisition a lieu sous vide secondaire (conditions d'acquisition : de 400 cm$^{-1}$ à 6000 cm$^{-1}$ ; nombre de scans : 100 ; résolution : 2 cm$^{-1}$).

L'analyse par ATR-diamant, réalisée sur un spectromètre Bruker Tensor 27, consiste à déposer sur le diamant une pointe de spatule de silice préalablement broyée dans un mortier en agate, puis à exercer une pression. Le spectre Infrarouge est enregistré sur le spectromètre en 20 scans, de 650 cm$^{-1}$ à 4000 cm$^{-1}$. La résolution est de 4 cm$^{-1}$.

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 130° et une tension superficielle gamma égale à 484 Dynes/cm (norme DIN 66133) pour la distribution poreuse et avec un angle de contact théta égal à 140° et une tension superficielle gamma égale à 485 Dynes/cm pour le volume poreux $V_{d1}$ et l'indice de finesse I.F.. La préparation de chaque échantillon se fait comme suit : chaque échantillon est préalablement séché pendant 2 heures en étuve à 200 °C.

Le rapport noté (R) est déterminé par la relation suivante :

$$(R) = N \times \frac{\left[\left(100 \times \frac{(C)}{C_T}\right) \times M_{Al}\right]}{\left((Al) \times M_{Ac}\right)},$$

dans laquelle :

- N est le nombre moyen de fonction carboxylique par acide polycarboxylique (par exemple, si tous les acides polycarboxyliques sont des acides dicarboxyliques (respectivement tricarboxyliques), N est égal à 2 (respectivement à 3)),
- (C) et (Al) sont les teneurs telles que définies ci-dessus,
- $C_T$ est la teneur en carbone du (des) acide(s) polycarboxylique(s),
- $M_{Al}$ est la masse moléculaire de l'aluminium,
- $M_{Ac}$ est la masse moléculaire du (des) acide(s) polycarboxylique(s).

La composante dispersive de l'énergie de surface $\gamma_s^d$ est déterminée par chromatographie gazeuse inverse. Un broyage de la silice est en général nécessaire quand elle se présente sous forme de granulés, suivi par un tamisage par exemple à 106 μm - 250 μm.

La technique utilisée pour calculer la composante dispersive de l'énergie de surface $\gamma_s^d$ est la Chromatographie Gazeuse Inverse à Dilution Infinie (CGI-DI), à 110°C en utilisant une série d'alcanes (normaux) allant de 6 à 10 atomes de carbone, une technique basée sur la chromatographie gazeuse, mais où le rôle de la phase mobile et de la phase stationnaire (remplissage) sont inversés. Ici, la phase stationnaire dans la colonne est remplacée par le matériau (solide) à analyser, ici la silice précipitée. Quant à la phase mobile, elle est constituée par le gaz vecteur (hélium) et des molécules "sondes" choisies en fonction de leur capacité d'interaction. Les mesures sont réalisées successivement avec chaque molécule sonde. Pour chaque mesure, chaque molécule sonde est injectée dans la colonne, en très faible quantité (dilution infinie), en mélange avec du méthane. Le méthane est utilisé pour déterminer le t0, le temps mort de la colonne.

La soustraction de ce temps mort t0 au temps de rétention de la sonde injectée conduit au temps de rétention net ($t_N$) de celle-ci.

Ces conditions opératoires, propres à la dilution infinie, font que ces temps de rétention reflètent uniquement l'interactivité de l'échantillon vis-à-vis de ces molécules. Physiquement, $t_N$ correspond au temps moyen que la molécule sonde a passé au contact de la phase stationnaire (le solide analysé). Pour chaque molécule sonde injectée, trois temps de rétention net $t_N$ sont mesurés. La valeur moyenne et l'écart-type correspondant sont utilisés pour déterminer les volumes de rétention spécifique ($V_g{}^0$) en s'appuyant sur la relation suivante (formule [1]).

$$V_g^0 = \frac{D_c t_N}{M_S} \cdot \frac{273,15}{T} \qquad \text{formule [1]}$$

Ce dernier correspond au volume de gaz vecteur (ramené à 0°C) nécessaire pour éluer la molécule sonde pour 1 gramme de phase stationnaire (solide examiné). Cette grandeur standard permet de comparer les résultats quel que soit le débit de gaz vecteur et la masse de phase stationnaire utilisée. La formule [1] fait appel à : $Ms$, la masse de solide dans la colonne, $Dc$ le débit de gaz vecteur et $T$ la température de mesure.

Le volume de rétention spécifique est ensuite utilisé pour accéder à $\Delta Ga$, la variation d'enthalpie libre d'adsorption de la sonde, selon la formule [2], avec R la constante universelle des gaz parfaits ($R = 8{,}314$ J·K⁻¹·mol⁻¹), sur le solide contenu dans la colonne.

$$\Delta G_a = RT.Ln(V_g^0) \qquad \text{formule [2]}$$

Cette grandeur $\Delta Ga$ est le point de départ pour la détermination de la composante dispersive de l'énergie de surface ($\gamma_s{}^d$). Celle-ci est obtenue en traçant la droite représentant la variation d'enthalpie libre d'adsorption ($\Delta Ga$) en fonction du nombre de carbone $n_c$ des sondes n-alcanes tel qu'indiqué dans le tableau ci-dessous.

| Sondes n-alcanes | $n_c$ |
|---|---|
| n-hexane | 6 |
| n-heptane | 7 |
| n-octane | 8 |
| n-nonane | 9 |
| n-décane | 10 |

On peut alors déterminer la composante dispersive de l'énergie de surface $\gamma_s{}^d$ à partir de la pente $\Delta Ga(CH2)$ de la droite des alcanes normaux, correspondant à l'enthalpie libre d'adsorption du groupe méthylène, obtenue pour une température de mesure de 110°C.

La composante dispersive de l'énergie de surface $\gamma_s{}^d$ est alors reliée à l'enthalpie libre d'adsorption $\Delta Ga(CH2)$ du groupe méthylène (méthode Dorris et Gray, J. Colloid Interface Sci., 77 (180), 353-362) par la relation suivante :

$$\gamma_S^d = \frac{(\Delta G_a^{CH_2})^2}{4 N_A^2 . a_{CH_2}^2 . \gamma_{CH_2}}$$

dans laquelle $N_A$ est le nombre d'Avogadro ($6{,}02.10^{23}$ mol⁻¹), $a_{CH_2}$ l'aire occupée par un groupement méthylène adsorbée ($0{,}06$ nm²) et $\gamma_{CH_2}$ l'énergie de surface d'un solide constitué uniquement de groupe méthylène et déterminée sur le polyéthylène ($35{,}6$ mJ/m² à 20 °C).

La mesure du taux de fines ($\tau f$), c'est-à-dire de la proportion (en poids) de particules de taille inférieure à 0,3 $\mu$m, après désagglomération aux ultra-sons, est effectuée selon le test décrit ci-après, et illustre également l'aptitude à la dispersion de la silice précipitée utilisée dans l'invention.

Dans ce test, on mesure l'aptitude à la dispersion de la silice par une mesure granulométrique (par sédimentation), effectuée sur une suspension de silice préalablement désagglomérée par ultra-sonification. La désagglomération (ou dispersion) sous ultra-sons est mise en œuvre à l'aide d'un sonificateur VIBRACELL BIOBLOCK (600 W), équipé d'une sonde de diamètre 19 mm. La mesure granulométrique est effectuée à l'aide d'un granulomètre SEDIGRAPH (sédimentation dans le champ de gravité + balayage par faisceau de rayons X).

On pèse dans un pilulier (de volume égal à 75 ml) 4 grammes de silice et l'on complète à 50 grammes par ajout d'eau permutée : on réalise ainsi une suspension aqueuse à 8 % de silice qui est homogénéisée pendant 2 minutes par agitation magnétique. On procède ensuite à la désagglomération (dispersion) sous ultra-sons comme suit : la sonde étant immergée sur une longueur de 4 cm, on règle la puissance de sortie de manière à obtenir une déviation de l'aiguille de puissance indiquant 20 %. La désagglomération est effectuée pendant 210 secondes. On réalise ensuite la mesure granulométrique au moyen d'un granulomètre SEDIGRAPH. Pour cela, on règle tout d'abord la vitesse de balayage vertical de la cellule par le faisceau de rayons X à 918, ce qui correspond à une taille maximale analysée de 85 μm. On fait circuler de l'eau permutée dans ladite cellule, puis on règle le zéro électrique et le zéro mécanique de l'enregistreur papier (ce réglage se faisant avec le potentiomètre « 100 % » de l'enregistreur à la sensibilité maximale). Le crayon de l'enregistreur papier est placé au point représentant la taille de départ de 85 μm. On fait ensuite circuler la suspension de silice désagglomérée, éventuellement refroidie au préalable, dans la cellule du granulomètre SEDIGRAPH (l'analyse granulométrique s'effectuant à 30 °C) et l'analyse démarre alors. L'analyse s'arrête automatiquement dès que la taille de 0,3 μm est atteinte (environ 45 minutes). On calcule alors le taux de fines (τf), c'est-à-dire la proportion (en poids) de particules de taille inférieure à 0,3 μm.

Ce taux de fines (τf), ou taux de particules de taille inférieure à 0,3 μm, est d'autant plus élevé que la silice présente une dispersibilité élevée.

L'indice de finesse (I.F) représente le rayon médian des pores intra-agrégats, c'est-à-dire le rayon des pores auquel correspond la surface de pores $S_0/2$ mesurée par porosimétrie au mercure ($S_0$ est la surface apportée par tous les pores dont le diamètre est supérieur ou égal à 100 Å).

La coordinence de l'aluminium est déterminée par RMN solide de l'aluminium.

La technique utilisée pour mesurer la reprise en eau consiste généralement à placer, dans des conditions d'humidité relative données et pendant une durée prédéfinie, l'échantillon de silice préalablement séché ; la silice s'hydrate alors, ce qui fait passer la masse de l'échantillon d'une valeur initiale m (à l'état séché) à une valeur finale m + dm. On désigne spécifiquement par « reprise en eau » d'une silice, en particulier dans toute la suite de l'exposé, le rapport dm/m (c'est-à-dire la masse d'eau intégrée à l'échantillon rapportée à la masse de l'échantillon à l'état sec) exprimé en pourcentage calculé pour un échantillon de silice soumis aux conditions suivantes lors de la méthode de mesure :

- séchage préliminaire : 8 heures, à 150 °C ;
- hydratation : 24 heures, à 20 °C, et sous une humidité relative de 70 %.

Le protocole expérimental mis en œuvre consiste à successivement :

- peser exactement environ 2 grammes de la silice à tester ;
- sécher pendant 8 heures la silice ainsi pesée dans une étuve réglée à une température de 105 °C ;
- déterminer la masse m de la silice obtenue à l'issue de ce séchage ;
- disposer pendant 24 heures, à 20 °C, la silice séchée dans un récipient fermé tel qu'un dessicateur contenant un mélange eau / glycérine, de façon à ce que l'humidité relative du milieu fermé soit de 70 % ;
- déterminer la masse (m + dm) de la silice obtenue suite à ce traitement de 24 heures à 70 % d'humidité relative, la mesure de cette masse étant effectuée immédiatement après avoir sorti la silice du dessicateur, de manière à éviter une variation de la masse de la silice sous l'influence du changement d'hygrométrie entre le milieu à 70 % d'humidité relative et l'atmosphère du laboratoire.

L'aptitude à la dispersion et à la désagglomération des silices peut être quantifiée au moyen du test spécifique de désagglomération ci-dessous.

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000) en mettant en œuvre la théorie de Fraunhofer.

On introduit 2 grammes (+/- 0,1 gramme) de silice dans un bécher de 50 ml (hauteur : 7,5 cm et diamètre : 4,5 cm) et l'on complète à 50 grammes par ajout de 48 grammes (+/- 0,1 gramme) d'eau permutée. On obtient ainsi une suspension aqueuse à 4 % de silice.

On procède ensuite à la désagglomération sous ultra-sons pendant 7 minutes.

On réalise ensuite la mesure granulométrique en introduisant dans la cuve du granulomètre la totalité de la suspension homogénéisée.

Le diamètre médian $\varnothing_{50M}$ (ou diamètre médian Malvern), après désagglomération aux ultra-sons, est tel que 50 % des particules en volume ont une taille inférieure à $\varnothing_{50M}$ et 50 % ont une taille supérieure à $\varnothing_{50M}$. La valeur du diamètre médian $\varnothing_{50M}$ que l'on obtient est d'autant plus faible que la silice présente une aptitude à la désagglomération élevée.

Il est également possible de déterminer de la même façon le facteur de désagglomération Malvern $F_{DM}$ par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000) en mettant en œuvre la théorie de Fraunhofer.

On introduit 1 gramme (+/- 0,1 gramme) de silice dans un bécher de 50 ml (hauteur : 7,5 cm et diamètre : 4,5 cm) et l'on complète à 50 grammes par ajout de 49 grammes (+/- 0,1 gramme) d'eau permutée. On obtient ainsi une suspension aqueuse à 2 % de silice.

On procède ensuite à la désagglomération sous ultra-sons pendant 7 minutes.

On réalise ensuite la mesure granulométrique en introduisant dans la cuve du granulomètre la totalité de la suspension homogénéisée.

Ce facteur de désagglomération est déterminé par le rapport (10 x valeur de l'obscuration du laser bleu / valeur de l'obscuration du laser rouge), cette densité optique correspondant à la valeur réelle détectée par le granulomètre lors de l'introduction de la silice.

Ce rapport (facteur de désagglomération Malvern $F_{DM}$) est indicatif du taux de particules de taille inférieure à 0,1 $\mu$m qui ne sont pas détectées par le granulomètre. Ce rapport est d'autant plus élevé que la silice présente une aptitude à la désagglomération élevée.

La densité de remplissage à l'état tassé (DRT) est mesurée selon la norme NF T 30-042.

Le pH est mesuré selon la méthode suivante dérivant de la norme ISO 787/9 (pH d'une suspension à 5 % dans l'eau) :

*Appareillage :*

- pHmètre étalonné (précision de lecture au 1/100$^e$)
- électrode de verre combinée
- bécher de 200 ml
- éprouvette de 100 ml
- balance de précision à 0,01 g près.

*Mode opératoire :*

5 grammes de silice sont pesées à 0,01 gramme près dans le bécher de 200 ml. 95 ml d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

Selon une première variante de l'invention, la silice précipitée selon l'invention est caractérisée en ce qu'elle possède :

- une surface spécifique CTAB comprise entre 175 et 250 m$^2$/g,
- une teneur (C) en acide polycarboxylique + carboxylate correspondant, exprimée en carbone total, d'au moins 0,15 % en poids, notamment d'au moins 0,20 % en poids,
- une distribution poreuse telle que le volume poreux constitué par les pores dont le diamètre est compris entre 175 et 275 Å (V2) représente moins de 55 % du volume poreux constitué par les pores de diamètres inférieurs ou égaux à 400 Å (V1),
- un volume poreux ($V_{d1}$) constitué par les pores de diamètre inférieur à 1 $\mu$m d'au moins à 1,50 cm$^3$/g.

La silice précipitée selon cette première variante de l'invention présente préférentiellement une teneur en aluminium inférieure à 1200 ppm, en particulier inférieure à 700 ppm, notamment inféirieure à 600 ppm, par exemple d'au plus 500 ppm, voire égale à 0 ppm.

Selon une seconde variante de l'invention, la silice précipitée selon l'invention est caractérisée en ce qu'elle possède :

- une surface spécifique CTAB comprise entre 175 et 250 m$^2$/g,
- une teneur (C) en acide polycarboxylique + carboxylate correspondant, exprimée en carbone total, d'au moins 0,15 % en poids, notamment d'au moins 0,20 % en poids,
- une teneur en aluminium (Al) d'au moins 0,20 % en poids, notamment d'au moins 0,25 % en poids,

- une distribution poreuse telle que le volume poreux constitué par les pores dont le diamètre est compris entre 175 et 275 Å (V2) représente moins de 55 % du volume poreux constitué par les pores de diamètres inférieurs ou égaux à 400 Å (V1),
- un volume poreux ($V_{d1}$) constitué par les pores de diamètre inférieur à 1 $\mu$m d'au moins à 1,50 cm$^3$/g.

La silice précipitée selon cette seconde variante de l'invetion peut notamment présenter une teneur en aluminium (Al) d'au moins 0,30 % en poids, en particulier d'au moins 0,33 % en poids. Elle présente généralement une teneur en aluminium (Al) inférieure à 1 % en poids, en particulier d'au plus 0,50 % en poids, par exemple d'au plus 0,45 % en poids.

La silice précipitée selon cette seconde variante de l'invention possède de préférence un rapport (R) compris entre 0,4 et 3,5, notamment entre 0,4 et 2,5. Ce rapport (R) peut également être compris entre 0,5 et 3,5, notamment entre 0,5 et 2,5, en particulier compris entre 0,5 et 2, par exemple entre 0,7 et 2, voire entre 0,7 et 1,8, ou entre 0,7 et 1,6.

Les silices précipitées selon l'invention (c'est-à dire, conformes à l'une des deux variantes de l'invention) peuvent présenter une surface spécifique BET comprise entre 175 et 260 m$^2$/g, de préférence entre 180 et 250 m$^2$/g, notamment entre 185 et 250 m$^2$/g, en particulier entre 185 et 215 m$^2$/g, par exemple entre 190 et 210 m$^2$/g.

Les silices précipitées selon l'invention peuvent notamment présenter une surface spécifique CTAB comprise entre 180 et 240 m$^2$/g, en particulier entre 185 et 210 m$^2$/g, par exemple entre 190 et 200 m$^2$/g.

Les silices précipitées selon l'invention peuvent notamment présenter une teneur (C) en acide polycarboxylique + carboxylate correspondant, exprimée en carbone total, d'au moins 0,24 % en poids, en particulier d'au moins 0,30 % en poids, par exemple d'au moins 0,35 % en poids, voire d'au moins 0,45 % en poids.

Elles présentent généralement une teneur en acide polycarboxylique + carboxylate (C) d'au plus 10,00 % en poids, en particulier d'au plus 5,00 % en poids.

Une des caractéristiques des silices précipitées selon l'invention réside dans la distribution, ou répartition de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères.

Ainsi, les silices précipitées selon l'invention peuvent notamment posséder une distribution poreuse telle que le volume poreux généré par les pores dont le diamètre est compris entre 175 et 275 Å (V2) représente moins de 55 %, en particulier moins de 50 %, par exemple entre 25 et 45 %, du volume poreux généré par les pores de diamètres inférieurs ou égaux à 400 Å (V1).

Les silices précipitées selon l'invention peuvent posséder un volume poreux ($V_{d1}$), constitué par les pores de diamètre inférieur à 1 $\mu$m, supérieur à 1,65 cm$^3$/g ; ce volume poreux peut être supérieur à 1,70 cm$^3$/g, par exemple compris entre 1,75 et 1,80 cm$^3$/g.

La présence des acides polycarboxyliques et/ou des carboxylates correspondants aux acides polycarboxyliques à la surface des silices selon l'invention peut être illustrée par la présence d'épaulements caractéristiques des liaisons C-O et C=O, visibles sur les spectres Infrarouge, obtenus notamment par Infrarouge de surface (transmission) ou ATR-diamant (en particulier entre 1540 et 1590 cm$^{-1}$ et entre 1380 et 1420 cm$^{-1}$ pour C-O, et entre 1700 et 1750 cm$^{-1}$ pour C=O).

En général les silices précipitées selon l'invention présentent à leur surface des molécules de l' (des) acide(s) polycarboxylique(s) précité(s), en particulier des acides polycarboxyliques des mélanges précités, et/ou du (des) carboxylate(s) correspondant à l' (aux) acide(s) polycarboxylique(s) précité(s), en particulier correspondant aux acides polycarboxyliques des mélanges précités.

Par exemple, elles peuvent présenter à leur surface :

- des molécules d'acide adipique sous forme acide et/ou sous forme carboxylate, et
- des molécules d'acide glutarique sous forme acide et/ou sous forme carboxylate, et
- des molécules d'acide succinique sous forme acide et/ou sous forme carboxylate.

Par exemple, elles peuvent présenter à leur surface :

- des molécules d'acide méthylglutarique sous forme acide et/ou sous forme carboxylate, et
- des molécules d'acide éthylsuccinique sous forme acide et/ou sous forme carboxylate, et
- des molécules d'acide adipique sous forme acide et/ou sous forme carboxylate.

De préférence, les silices selon l'invention présentent une composante dispersive de l'énergie de surface $\gamma_s^d$ inférieure à 43 mJ/m$^2$, notamment inférieure à 42 mJ/m$^2$, en particulier inférieure à 40 mJ/m$^2$, par exemple inférieure à

$35 \text{ mJ/m}^2$.

De préférence, les silices précipitées selon l'invention possède un taux de fines ($\tau$f), après désagglomération aux-ultra-sons, d'au moins 50 %, par exemple d'au moins 55 %.

De préférence, les silices précipitées selon l'invention présentent un indice de finesse (I.F.) compris entre 75 et 110 Å, en particulier entre 80 et 105 Å.

En outre, les silices précipitées selon l'invention peuvent posséder une répartition de la coordinence de l'aluminium spécifique, déterminée par RMN solide de l'aluminium. En général, au plus 85 % en nombre, notamment au plus 80 % en nombre, en particulier entre 70 et 85 % en nombre, par exemple entre 70 et 80 % en nombre, des atomes d'aluminium des silices selon l'invention, peuvent présenter une coordinence tétraédrique, c'est-à-dire peuvent être en site tétraédrique. En particulier entre 15 et 30 % en nombre, par exemple entre 20 et 30 % en nombre, des atomes d'aluminium des silices selon l'invention, peuvent présenter une coordinence pentaédrique et octaédrique, c'est-à-dire peuvent être en site pentaédrique ou octaédrique.

Les silices précipitées selon l'invention peuvent présenter une reprise en eau supérieure à 6,0 %, en particulier supérieure à 7,0 %, notamment supérieure à 7,5 %, par exemple supérieure à 8,0 %, voire supérieure à 8,5 %.

En général, les silices précipitées selon l'invention présentent une aptitude à la dispersion (notamment dans les élastomères) et à la désagglomération élevée.

Les silices précipitées selon l'invention peuvent présenter un diamètre médian $\varnothing_{50M}$ après désagglomération aux ultra-sons inférieur 9,0 $\mu$m, en particulier inférieur à 8,5 $\mu$m, par exemple compris entre 5,0 et 8,0 $\mu$m.

Les silices précipitées selon l'invention peuvent présenter un facteur de désagglomération aux ultra-sons $F_{DM}$ peut être supérieur à 5,5 ml, en particulier supérieur à 9,0 ml, par exemple supérieur à 10,0 ml.

Les silices précipitées selon l'invention peuvent posséder une densité de remplissage à l'état tassé (DRT), en général, supérieure à 0,26, en particulier supérieure à 0,28 ; elle est par exemple au moins égale à 0,30.

Les silices précipitées selon l'invention présentent, généralement, un pH compris entre 4,0 et 7,5, de préférence compris entre 4,5 et 6,5.

L'état physique dans lequel se présentent les silices précipitées selon l'invention peut être quelconque, c'est-à-dire qu'elles peuvent se présenter sous forme de billes sensiblement sphériques (microperles), de poudre ou de granulés.

Elles peuvent ainsi se présenter sous forme de poudre de taille moyenne d'au moins 3 $\mu$m, en particulier d'au moins 10 $\mu$m, de préférence d'au moins 15 $\mu$m. Elle est par exemple comprise entre 15 et 60 $\mu$m.

Elles peuvent également se présenter sous forme de granulés (en général de forme sensiblement parallélépipédique) de taille d'au moins 1 mm, par exemple comprise entre 1 et 10 mm, notamment selon l'axe de leur plus grande dimension (longueur).

Elles peuvent, de préférence, se présenter sous forme de billes sensiblement sphériques de taille moyenne d'au moins 80 $\mu$m, de préférence d'au moins 150 $\mu$m, en particulier comprise entre 150 et 300 $\mu$m ; cette taille moyenne est déterminée selon la norme NF X 11507 (décembre 1970) par tamisage à sec et détermination du diamètre correspondant à un refus cumulé de 50 %.

Les silices selon l'invention sont de préférence obtenues par le procédé décrit précédemment.

De manière avantageuse, les silices précipitées selon la présente invention ou (susceptibles d'être) obtenues par le procédé selon l'invention précédemment décrit confèrent aux compositions de polymère(s) (élastomère(s)) dans lesquelles elles sont introduites, un compromis de propriétés très satisfaisant, notamment une réduction de leur viscosité et de préférence une amélioration de leurs propriétés dynamiques tout en conservant leurs propriétés mécaniques. Elles permettent ainsi de manière avantageuse une amélioration du compromis mise en œuvre / renforcement / propriétés hystérétiques. De manière préférée, elles présentent une bonne aptitude à la dispersion et à la désagglomération dans les compositions de polymère(s) (élastomère(s)).

Les silices précipitées selon la présente invention ou (susceptibles d'être) obtenues par le procédé selon l'invention précédemment décrit peuvent être utilisées dans de nombreuses applications.

Elles peuvent être employées par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elles trouvent une application particulièrement intéressante dans le renforcement des polymères, naturels ou synthétiques.

Les compositions de polymère(s) dans lesquelles elles peuvent être employées, notamment à titre de charge renforçante, sont en général à base d'un ou plusieurs polymères ou copolymères (notamment bipolymères ou terpolymères), en particulier d'un ou plusieurs élastomères, présentant, de préférence, au moins une température de transition vitreuse comprise entre -150 et +300 °C, par exemple entre -150 et + 20 °C.

A titre de polymères possibles, on peut mentionner notamment les polymères diéniques, en particulier les élastomères diéniques.

Par exemple, on peut utiliser les polymères ou copolymères (notamment bipolymères ou terpolymères) dérivant de monomères aliphatiques ou aromatiques, comprenant au moins une insaturation (tels que, notamment, l'éthylène, le propylène, le butadiène, l'isoprène, le styrène, l'acrylonitrile, l'isobutylène, l'acétate de vinyle), le polyacrylate de butyle, ou leurs mélanges ; on peut également citer les élastomères silicones, les élastomères fonctionnalisés, par exemple par des groupements chimiques disposés tout le long de la chaîne macromoléculaire et/ou en une ou plusieurs de ses extrémités (par exemple par des fonctions susceptibles de réagir avec la surface de la silice) et les polymères halogénés. On peut mentionner les polyamides et les polymères fluorés (tels que le polyfluorure de vinylidène).

On peut également mentionner les polymères thermoplastiques tels que le polyéthylène.

Le polymère (copolymère) peut être un polymère (copolymère) en masse, un latex de polymère (copolymère) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM) ainsi que les polymères fonctionnalisés associés (présentant par exemple des groupements polaires inclus dans la chaîne, pendant ou en bout de chaine et pouvant interagir avec la silice).

On peut également citer le caoutchouc naturel (NR) et le caoutchouc naturel epoxydé (ENR).

Les compositions de polymère(s) peuvent être vulcanisées au soufre (on obtient alors des vulcanisats) ou réticulées notamment aux peroxydes ou autres systèmes de réticulation (par exemple diamines ou résines phénoliques).

En général, les compositions de polymère(s) comprennent en outre au moins un agent de couplage (silice/polymère) et/ou au moins un agent de recouvrement ; elles peuvent également comprendre, entre autres, un agent antioxydant.

On peut notamment utiliser comme agents de couplages, à titre d'exemples non limitatifs, des silanes polysulfurés, dits « symétriques » ou « asymétriques » ; on peut citer plus particulièrement les polysulfures (notamment disulfures, trisulfures ou tétrasulfures) de bis-(alkoxyl($C_1$-$C_4$)-alkyl($C_1$-$C_4$)Silyl-alkyl($C_1$-$C_4$)), comme par exemple les polysulfures de bis(3-(triméthoxysilyl)propyl) ou les polysulfures de bis(3-(triéthoxysilyl)propyl), tels que le tétrasulfure de triéthoxysilylpropyle. On peut également citer le tétrasulfure de monoéthoxydiméthylsilylpropyle. On peut également citer des silanes à fonction thiols masqués ou non, à fonction amines.

L'agent de couplage peut être préalablement greffé sur le polymère.

Il peut être également employé à l'état libre (c'est-à-dire non préalablement greffé) ou greffé à la surface de la silice. Il en est de même de l'éventuel agent de recouvrement.

A l'agent de couplage peut éventuellement être associé un « activateur de couplage » approprié, c'est-à-dire un composé qui, mélangé avec cet agent de couplage, augmente l'efficacité de ce dernier.

La proportion en poids de silice dans la composition de polymère(s) peut varier dans une gamme assez large. Elle représente habituellement 0,1 à 3,0 fois en poids, en particulier 0,1 à 2,0 fois en poids, notamment 0,2 à 1,5 fois en poids, par exemple 0,2 à 1,2 fois en poids, voire 0,3 à 0,8 fois en poids de la quantité du (des) polymère(s).

La silice selon l'invention peut avantageusement constituer la totalité de la charge inorganique renforçante, et même la totalité de la charge renforçante, de la composition de polymère(s).

Cependant, à cette silice selon l'invention peut être éventuellement associée au moins une autre charge renforçante, comme en particulier une silice hautement dispersible commerciale telle que par exemple la Z1165MP, la Z1115MP, une silice précipitée traitée (par exemple « dopée » à l'aide d'un cation comme l'aluminium ou traitée avec un agent de couplage tel qu'un silane) ; une autre charge inorganique renforçante telle que par exemple l'alumine, voire même une charge organique renforçante, notamment du noir de carbone (éventuellement recouvert d'une couche inorganique, par exemple de silice). La silice selon l'invention constitue alors de préférence au moins 50 %, voire au moins 80 % en poids de la totalité de la charge renforçante.

On peut citer, comme exemples non limitatifs d'articles finis comprenant au moins une (en particulier à base) desdites compositions de polymère(s) décrites précédemment (notamment à base des vulcanisats mentionnés ci-dessus), les semelles de chaussures (de préférence en présence d'un agent de couplage (silice/polymère), par exemple le tétrasulfure de triéthoxysilylpropyle), les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les séparateurs de batterie, les bandes de convoyeur, les courroies de transmissions, ou, de préférence, les pneumatiques, en particulier les bandes de roulement de pneumatiques (notamment pour véhicules légers ou pour véhicules poids lourds (camions par exemple)).

Les exemples suivants illustrent l'invention sans toutefois en limiter la portée.

EXEMPLES

EXEMPLE 1

Dans un réacteur en acier inoxydable muni d'un système d'agitation par hélices et d'un chauffage par vapeur vive dans le milieu réactionnel, on introduit 869 litres d'eau, 16,5 kg de $Na_2SO_4$ (électrolyte) et 302 litres de silicate de sodium aqueux, présentant un rapport pondéral $SiO_2/Na_2O$ égal à 3,46 et une densité à 20 °C égale à 1,236.

La concentration en silicate (exprimée en $SiO_2$) dans le pied de cuve est alors de 64 g/l. Le mélange est porté à une température de 82 °C tout en le maintenant sous agitation.

On introduit alors dans le réacteur 366 litres d'acide sulfurique à 7,7 % massique à un débit de 549 l/h jusqu'à ce que le pH du milieu réactionnel atteigne une valeur égale à 8,0. La température de la réaction est de 82 °C pendant les 25 premières minutes; elle est ensuite portée de 82 °C à 90 °C en 10 minutes environ, puis maintenue à 90 °C jusqu'à la fin de la réaction.

On introduit ensuite simultanément dans le milieu réactionnel 93,8 litres de silicate de sodium aqueux du type décrit ci-avant à un débit de 141 l/h et de l'acide sulfurique, également du type décrit ci-avant, à un débit régulé de manière telle que le pH du milieu réactionnel, pendant cette période d'introduction, soit constamment égal à 8,0 ± 0,1.

Après introduction de la totalité du silicate, on continue à introduire de l'acide dilué pendant 10 minutes environ de manière à amener le pH du milieu réactionnel à une valeur égale à 4,4.

On obtient ainsi une bouillie de silice précipitée qui est filtrée et lavée au moyen d'un filtre presse de telle sorte qu'on récupère un gâteau de silice ayant un extrait sec de 20 % en poids.

EXEMPLE 2

Une partie du gâteau de silice obtenu à l'exemple 1 est ensuite soumis à une étape de délitage.

Lors de l'opération de délitage, on utilise une solution d'un mélange MGA à 34 % massique (mélange d'acides polycarboxyliques : 94,8 % en poids d'acide méthylglutarique, 4,9 % en poids d'anhydride éthylsuccinique, 0,2 % en poids d'acide adipique, 0,1 % autres).

On fait subir au gâteau obtenu à l'étape de filtration une opération de délitage dans un réacteur fortement agité continu avec ajout au gâteau de 41,7 grammes de la solution de MGA (rapport pondéral mélange MGA / $SiO_2$ de 1,0 %).

Ce gâteau délité (ayant un extrait sec de 20 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 300 °C
Température de sortie moyenne : 130 °C
Débit moyen : 24 l/h.

Les caractéristiques de la silice S1 obtenue (sous forme de billes sensiblement sphériques) sont alors les suivantes :

| | |
|---|---|
| BET ($m^2$/g) | 184 |
| Teneur en acide polycarboxylique + carboxylate (C) (%) | 0,39 |
| Teneur en aluminium (Al) (%) | < 0,05 |
| CTAB ($m^2$/g) | 202 |
| $\gamma_s^d$ (mJ/$m^2$) | 31,8 |
| V2/V1 (%) | 22,8 |
| $V_{d1}$ ($cm^3$/g) | 1,67 |
| Reprise en eau (%) | 8,5 |
| I.F. (Å) | 98 |
| $\varnothing_{50M}$ ($\mu$m) après désagglomération aux ultra-sons | 5,5 |
| $F_{DM}$ après désagglomération aux ultra-sons | 12,8 |
| pH | 4,78 |

EXEMPLE 3

Une partie du gâteau de silice obtenu à l'exemple 1 est ensuite soumis à une étape de délitage.

Lors de l'opération de délitage, on utilise une solution d'un mélange MGA à 34 % massique (mélange d'acides polycarboxyliques : 94,8 % en poids d'acide méthylglutarique, 4,9 % en poids d'anhydride éthylsuccinique, 0,2 % en poids d'acide adipique, 0,1 % autres).

On fait subir au gâteau obtenu à l'étape de filtration une opération de délitage dans un réacteur fortement agité continu avec ajout simultané au gâteau de 31,2 grammes d'une solution d'aluminate de sodium (rapport pondéral Al/SiO$_2$ de 0,3 %) et de 41,8 grammes de la solution de MGA (rapport pondéral mélange MGA / SiO$_2$ de 1,0 %).

Ce gâteau délité (ayant un extrait sec de 21 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 135 °C
Débit moyen : 15 l/h.

Les caractéristiques de la silice S2 obtenue (sous forme de billes sensiblement sphériques) sont alors les suivantes :

| | |
|---|---|
| BET (m$^2$/g) | 179 |
| Teneur en acide polycarboxylique + carboxylate (C) (%) | 0,43 |
| Teneur en aluminium (Al) (%) | 0,37 |
| Rapport (R) | 0,8 |
| CTAB (m$^2$/g) | 201 |
| $\gamma_s^d$ (mJ/m$^2$) | 35,2 |
| V2/V1 (%) | 25,5 |
| V$_{d1}$ (cm$^3$/g) | 1,65 |
| Reprise en eau (%) | 8,9 |
| I.F. (Å) | 99 |
| $\varnothing_{50M}$ ($\mu$m) après désagglomération aux ultra-sons | 8,0 |
| F$_{DM}$ après désagglomération aux ultra-sons | 14,0 |
| pH | 5,71 |

EXEMPLE 4 (Comparatif)

Une partie du gâteau de silice obtenu à l'exemple 1 est ensuite soumis à une étape de délitage.

On fait subir au gâteau obtenu à l'étape de filtration une opération de délitage dans un réacteur fortement agité continu avec ajout simultané au gâteau de 31,6 grammes d'une solution d'aluminate de sodium (rapport pondéral Al/SiO$_2$ de 0,3 %) et de 46 grammes d'une solution d'acide sulfurique à 7,7 % massique.

Ce gâteau délité (ayant un extrait sec de 20 % en poids) est ensuite séché au moyen d'un atomiseur à buses bi-fluide en pulvérisant le gâteau délité au travers d'une buse SU5 (Spraying System) de 2,54 mm avec une pression de 1 bar sous les conditions moyennes de débit et de températures suivantes :

Température d'entrée moyenne : 250 °C
Température de sortie moyenne : 135 °C
Débit moyen : 15 l/h.

Les caractéristiques de la silice C1 obtenue (sous forme de billes sensiblement sphériques) sont alors les suivantes :

| | |
|---|---|
| BET (m$^2$/g) | 188 |
| Teneur en acide polycarboxylique + carboxylate (C) (%) | - |
| Teneur en aluminium (Al) (%) | 0,38 |
| Rapport (R) | 0,0 |
| CTAB (m$^2$/g) | 200 |
| $\gamma_s^d$ (mJ/m$^2$) | 47,9 |
| V2/V1 (%) | 25,8 |
| V$_{d1}$ (Cm$^3$/g) | 1,60 |
| Reprise en eau (%) | 9,1 |
| I.F. (Å) | 95 |
| $\varnothing_{50M}$ ($\mu$m) après désagglomération aux ultra-sons | 7,3 |
| F$_{DM}$ après désagglomération aux ultra-sons | 12,7 |
| pH | 6,49 |

EXEMPLE 5

Dans un mélangeur interne de type Haake (380 ml), on prépare les compositions élastomériques dont la constitution, exprimée en partie en poids pour 100 parties d'élastomères (pce), est indiquée dans le tableau I ci-dessous :

Tableau I

| Composition | Témoin 1 | Composition 1 |
|---|---|---|
| SBR (1) | 103 | 103 |
| BR (1) | 25 | 25 |
| Silice C1 (2) | 80 | |
| Silice S1 (3) | | 80 |
| Agent de couplage (4) | 8 | 8 |
| Plastifiant (5) | 5 | 5 |
| Noir de carbone (N330) | 3 | 3 |
| ZnO | 3 | 3 |
| Acide stéarique | 2 | 2 |
| Antioxydant (6) | 1,9 | 1,9 |
| DPG (7) | 1,9 | 1,9 |
| CBS (8) | 2 | 2 |
| Soufre | 1,1 | 1,1 |

(1) SBR solution (Buna VSL5025-2 de la société Lanxess) avec 50+/-4 % de motifs vinyl ; 25+/-2 % de motifs styrène ; Tg voisin de -20°C ; 100 phr de SBR étendu avec 37,5+/-2,8 % en poids d'huile / BR (Buna CB 25 de la société Lanxess)
(2) Silice C1 (délitage avec addition simultanée d'aluminate de sodium et d'acide sulfurique (exemple 4 - comparatif))
(3) Silice S1 selon la présente invention (délitage avec addition d'un mélange d'acides MGA (exemple 2 ci-dessus))
(4) TESPT (LUVOMAXX TESPT de la société LEHVOSS France sarl)
(5) Huile plastifiante de type TDAE (Vivatec 500 de la société Hansen & Rosenthal KG)
(6) N-1,3-diméthylbutyl-N-phényl-para-phénylènediamine (Santoflex 6-PPD de la société Flexsys)
(7) Diphénylguanidine (Rhénogran DPG-80 de la société RheinChemie)
(8) N-cyclohexyl-2-benzothiazyl-sulfénamide (Rhénogran CBS-80 de la société RheinChemie)

Procédé de préparation des compositions élastomériques :
Le procédé de préparation des compositions de caoutchouc est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque Haake (capacité de 380 ml). Le coefficient de remplissage est de 0,6. La température initiale et la vitesse des rotors sont fixées à chaque fois de manière à atteindre des températures de tombée de mélange voisines de 140-160°C.

Décomposée ici en deux passes, la première phase permet d'incorporer dans une première passe, les élastomères puis la charge renforçante (introduction fractionnée) avec l'agent de couplage et l'acide stéarique. Pour cette passe, la durée est comprise entre 4 et 10 minutes.

Après refroidissement du mélange (température inférieure à 100°C), une seconde passe permet d'incorporer l'oxyde de zinc et les agents protecteurs/antioxydants (6-PPD notamment). La durée de cette passe est comprise entre 2 et 5 minutes.

Après refroidissement du mélange (température inférieure à 100°C), la seconde phase permet l'introduction du système de vulcanisation (soufre et accélérateurs, comme le CBS). Elle est réalisée sur un mélangeur à cylindres, préchauffé à 50°C. La durée de cette phase est comprise entre 2 et 6 minutes.

Chaque mélange final est ensuite calandré sous la forme de plaques d'épaisseur 2-3 mm.

Sur ces mélanges obtenus dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

Propriétés rhéologiques

- Viscosité des mélanges crus :

La consistance Mooney est mesurée sur les compositions à l'état cru à 100°C au moyen d'un rhéomètre MV 2000 ainsi que la détermination du taux de relaxation de contrainte Mooney selon la norme NF ISO 289.

La valeur du couple lue au bout de 4 minutes après un préchauffage d'une minute (Mooney Large (1+4) - à 100°C) est indiquée dans le tableau II. Le test est réalisé après confection des mélanges crus puis après un vieillissement durant 3 semaines à une température de 23 +/- 3°C.

Tableau II

| Références | | | Témoin 1 | Composition 1 |
|---|---|---|---|---|
| ML (1+4) - 100°C | Initial | | 97 | 84 |
| Relaxation Mooney | Initial | | 0,306 | 0,321 |
| ML (1+4) - 100°C | Après 7 jours (23 +/- 3°C) | | 103 | 86 |
| Relaxation Mooney | Après 7 jours (23 +/- 3°C) | | 0,288 | 0,312 |
| ML (1+4) - 100°C | Après 21 jours (23 +/- 3°C) | | 118 | 95 |
| Relaxation Mooney | Après 21 jours (23 +/- 3°C) | | 0,249 | 0,269 |

On constate que la silice S1 de la présente invention (Composition 1) permet une réduction conséquente de la viscosité à cru initiale, par rapport au mélange témoin (Témoin 1).

On constate également que la silice S1 de la présente invention (Composition 1) permet de conserver l'avantage en viscosité à cru réduite, par rapport au mélange témoin (Témoin 1), après 3 semaines de stockage.

Ce type de comportement dans le temps est très utile pour l'homme de l'art dans le cas de la mise en œuvre de mélanges caoutchouc contenant de la silice.

- Rhéométrie des compositions :

Les mesures sont réalisées sur les compositions à l'état cru. On a porté dans le tableau III les résultats concernant le test de rhéologie qui est conduit à 160°C au moyen d'un rhéomètre ODR MONSANTO selon la norme NF ISO 3417.

Selon ce test, la composition à tester est placée dans la chambre d'essai régulée à la température de 160°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :

- le couple minimum (Cmin) qui reflète la viscosité de la composition à la température considérée ;
- le couple maximum (Cmax) ;
- le delta-couple ($\Delta C$ = Cmax - Cmin) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au-dessus du couple minimum à la température considérée (160°C) et qui reflète le temps pendant lequel il est possible de mettre en œuvre les mélanges crus à cette température sans avoir d'initiation de la vulcanisation (le mélange durcit à partir de TS2).

Les résultats obtenus sont indiqués dans le tableau III.

Tableau III

| Compositions | Témoin 1 | Composition 1 |
|---|---|---|
| Cmin (dN.m) | 20,8 | 17,2 |
| Cmax (dN.m) | 70,1 | 66,5 |
| Delta couple (dN.m) | 49,3 | 49,3 |
| TS2 (min) | 3,76 | 4,20 |
| T98 (min) | 26,24 | 26,71 |

On constate que, tout en ayant une viscosité à cru réduite, l'utilisation de la silice S1 de la présente invention (Composition 1) permet de réduire la viscosité minimale (signe d'une amélioration de la viscosité à cru) par rapport au mélange témoin (Témoin 1) sans pénaliser le comportement en vulcanisation.

On constate également que l'utilisation de la silice S1 de la présente invention (Composition 1) permet l'amélioration du temps de grillage TS2 par rapport au mélange témoin (Témoin 1) sans pénaliser le temps T98.

Propriétés mécaniques des vulcanisats :

Les mesures sont réalisées sur les compositions vulcanisées à l'optimum (T98) pour une température de 160°C.

Les essais de traction uni-axiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction, et la résistance à la rupture sont exprimés en MPa ; l'allongement à la rupture est exprimé en %. Il est possible de déterminer un indice de renforcement (I.R.) qui est égal au rapport entre le module à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblées dans le tableau IV.

Tableau IV

| Compositions | Témoin 1 | Composition 1 |
|---|---|---|
| Module 10 % (MPa) | 1,01 | 0,86 |
| Module 100 % (MPa) | 3,4 | 2,63 |
| Module 300 % (MPa) | 13,3 | 11,2 |
| Résistance rupture (MPa) | 18,6 | 20,2 |
| Allongement à la rupture (%) | 381 | 445 |
| I.R. | 3,90 | 4,25 |
| Dureté Shore A-15s (pts) | 71 | 69 |

On constate que la composition issue de l'invention (Composition 1) présente un bon compromis de propriétés mécaniques par rapport à ce qui est obtenu avec le mélange témoin.

L'utilisation de la silice S1 de la présente invention (Composition 1) permet d'améliorer les propriétés à la rupture tout en conservant un indice de renforcement élevé par rapport au mélange témoin (Témoin 1).

Propriétés dynamiques des vulcanisats :

Les propriétés dynamiques sont mesurées sur un viscoanalyseur (Metravib VA3000), selon la norme ASTM D5992.

Les valeurs de facteur de perte (tan $\delta$) et de module complexe en compression dynamique (E*) sont enregistrées sur des échantillons vulcanisés (éprouvette cylindrique de section 95 mm$^2$ et de hauteur 14 mm). L'échantillon est soumis au départ à une pré-déformation de 10 % puis à une déformation sinusoïdale en compression alternée de +/- 2%. Les mesures sont réalisées à 60°C et à une fréquence de 10 Hz.

Les résultats, présentés dans le tableau V, sont ainsi le module complexe en compression (E* - 60°C - 10 Hz) et le facteur de perte (tan $\delta$ - 60°C - 10 Hz).

Tableau V

| Compositions | Témoin 1 | Composition 1 |
|---|---|---|
| E* - 60°C - 10 Hz (MPa) | 10,70 | 10,50 |
| Tan $\delta$ - 60°C - 10 Hz | 0,149 | 0,154 |

L'utilisation d'une silice S1 de la présente invention (Composition 1) permet de maintenir les propriétés dynamiques au niveau de celle du mélange témoin (Témoin 1).

L'examen des différents tableaux II à V montre que la composition conforme à l'invention (Composition 1) permet d'obtenir un bon compromis mise en œuvre / renforcement / propriétés hystérétiques par rapport à la composition témoin (Témoin 1) et notamment un gain conséquent en viscosité à cru qui reste stable au stockage dans le temps.

**Revendications**

1. Silice précipitée, **caractérisée en ce qu'**elle possède :

   - une surface spécifique CTAB comprise entre 175 et 250 m$^2$/g,
   - une teneur C en acide polycarboxylique + carboxylate correspondant, exprimée en carbone total, d'au moins 0,15 % en poids, notamment d'au moins 0,20 % en poids,
   - une distribution poreuse telle que le volume poreux constitué par les pores dont le diamètre est compris entre 175 et 275 Å représente moins de 50 % du volume poreux constitué par les pores de diamètres inférieurs ou égaux à 400 Å et
   - un volume poreux $V_{d1}$ constitué par les pores de diamètre inférieur à 1 $\mu$m d'au moins 1,50 cm$^3$/g, et

   **caractérisé en ce que** ledit acide polycarboxylique est choisi parmi les acides polycarboxyliques linéaires ou ramifiés, saturés ou insaturés, aliphatiques ayant de 2 à 20 atomes de carbone ou aromatiques.

2. Silice précipitée, selon la revendication 1 **caractérisée en ce qu'**elle possède :

   - une teneur en aluminium (Al) d'au moins 0,20 % en poids, notamment d'au moins 0,25 % en poids.

3. Procédé de préparation d'une silice précipitée selon les revendications 1 ou 2, ledit procédé étant du type comprenant la réaction de précipitation entre un silicate et un agent acidifiant ce par quoi l'on obtient une suspension de silice précipitée, **caractérisé en ce qu'**il comprend les étapes suivantes :

   - on réalise la réaction de précipitation de la manière suivante :

      (i) on forme un pied de cuve initial comportant au moins une partie de la quantité totale du silicate engagé dans la réaction et un électrolyte, la concentration en silicate, exprimée en SiO$_2$, dans ledit pied de cuve initial étant comprise entre 50 et 70 g/l,

(ii) on ajoute l'agent acidifiant audit pied de cuve jusqu'à l'obtention d'une valeur du pH du milieu réactionnel comprise entre 7,0 et 8,5,

(iii) on ajoute au milieu réactionnel de l'agent acidifiant et, le cas échéant, simultanément la quantité restante du silicate,

- la séparation comprend une filtration et un lavage au moyen d'un filtre équipé d'un moyen de compactage,
- on soumet le gâteau de filtration obtenu à l'issue de la filtration à une opération de délitage,
- on sèche par atomisation une suspension, de préférence présentant un taux de matière sèche d'au plus 23 %, ledit procédé étant **caractérisé en ce qu'**on ajoute au gâteau de filtration, soit au cours de l'opération de délitage, soit après l'opération de délitage et avant l'étape de séchage, au moins un acide polycarboxylique choisi parmi les acides polycarboxyliques linéaires ou ramifiés, saturés ou insaturés, aliphatiques ayant de 2 à 20 atomes de carbone ou aromatiques.

4. Procédé selon la revendication 3, dans lequel, au cours de l'opération de délitage, au moins un acide polycarboxylique est ajouté au gâteau de filtration.

5. Procédé selon la revendication 3, dans lequel au moins un acide polycarboxylique est ajouté au gâteau de filtration après l'opération de délitage.

6. Procédé selon la revendication 3, dans lequel l'opération de délitage comprend l'addition d'au moins un composé de l'aluminium.

7. Procédé selon la revendication 6, dans lequel, au cours de l'opération de délitage, au moins un acide polycarboxylique et au moins composé d'aluminium sont simultanément ajoutés au gâteau de filtration.

8. Procédé selon la revendication 6, dans lequel, au cours de l'opération de délitage, au moins un composé d'aluminium est ajouté au gâteau de filtration préalablement à l'ajout d'au moins un acide polycarboxylique.

9. Procédé selon l'une des revendications 3 à 8, dans lequel on ajoute un mélange d'acides polycarboxyliques au gâteau de filtration.

10. Procédé selon la revendication 9, dans lequel le mélange d'acides polycarboxyliques comprend les acides suivants : acide adipique, acide glutarique et acide succinique.

11. Procédé selon la revendication 9, dans lequel le mélange d'acides polycarboxyliques comprend les acides suivants : acide méthylglutarique, acide éthylsuccinique et acide adipique.

12. Utilisation comme charge renforçante pour polymères, notamment pour pneumatiques, d'une silice précipitée selon la revendication 1 ou 2 ou obtenue par le procédé selon l'une des revendications 3 à 11.

13. Composition de polymères comprenant une silice précipitée selon la revendication 1 ou 2 ou obtenue par le procédé selon l'une des revendications 3 à 11.

14. Article comprenant au moins une composition selon la revendication 13, cet article consistant en une semelle de chaussures, un revêtement de sols, une barrière aux gaz, un matériau ignifugeant, un galet de téléphérique, un joint d'appareils électroménagers, un joint de conduites de liquides ou de gaz, un joint de système de freinage, un tuyau, une gaine, un câble, un support de moteur, un séparateur de batterie, une bande de convoyeur, une courroie de transmissions, ou, de préférence, un pneumatique.

**Patentansprüche**

1. Fällungskieselsäure, **dadurch gekennzeichnet, dass** sie

- eine spezifische CTAB-Oberfläche zwischen 175 und 250 $m^2$/g,
- einen Gehalt C an Polycarbonsäure + entsprechendem Carbonat, ausgedrückt als Gesamtkohlenstoff, von mindestens 0,15 Gew.-%, insbesondere mindestens 0,2 Gew.-%,
- eine solche Porenverteilung, dass das durch die Poren mit einem Durchmesser zwischen 175 und 275 Å gebildete Porenvolumen weniger als 50 % des durch die Poren mit Durchmessern kleiner oder gleich 400 Å gebildeten Porenvolumens ausmachen, und

- ein durch die Poren mit einem Durchmesser von weniger als 1 $\mu$m gebildetes Porenvolumen $V_{d1}$ von mindestens 1,50 cm$^3$/g

aufweist, und

**dadurch gekennzeichnet, dass** die Polycarbonsäure aus linearen oder verzweigten, gesättigten oder ungesättigten, aliphatischen Polycarbonsäuren mit 2 bis 20 Kohlenstoffatomen oder aromatischen Polycarbonsäuren ausgewählt ist.

2. Fällungskieselsäure nach Anspruch 1, **dadurch gekennzeichnet, dass** sie

- einen Gehalt an Aluminium (Al) von mindestens 0,20 Gew.-%, insbesondere mindestens 0,25 Gew.-%, aufweist.

3. Verfahren zur Herstellung einer Fällungskieselsäure nach Anspruch 1 oder 2 des Typs, der die Fällungsreaktion zwischen einem Silikat und einem Ansäuerungsmittel, wodurch man eine Suspension von Fällungskieselsäure erhält, umfasst, **dadurch gekennzeichnet, dass** es die folgenden Schritte umfasst:

- man führt die Fällungsreaktion folgendermaßen durch:

(i) man bildet eine anfängliche Vorlage, die mindestens einen Teil der Gesamtmenge des an der Reaktion beteiligten Silikats und einen Elektrolyt umfasst, wobei die als $SiO_2$ ausgedrückte Konzentration an Silikat in der anfänglichen Vorlage zwischen 50 und 70 g/l liegt,
(ii) man gibt das Ansäuerungsmittel zu der Vorlage, bis man einen pH-Wert des Reaktionsmediums zwischen 7,0 und 8,5 erhält,
(iii) man gibt das Ansäuerungsmittel und gegebenenfalls gleichzeitig die Restmenge des Silikats zu dem Reaktionsmedium,

- die Trennung umfasst eine Filtration und eine Wäsche mit Hilfe eines mit einem Kompaktierungsmittel ausgestatteten Filters,
- man unterwirft den am Ende der Filtration erhaltenen Filterkuchen einem Aufbrechvorgang,
- man trocknet eine Suspension, die vorzugsweise einem Feststoffgehalt von höchstens 23 % aufweist, durch Zerstäubung,

wobei das Verfahren **dadurch gekennzeichnet ist, dass** man dem Filterkuchen entweder im Lauf des Aufbrechvorgangs oder nach dem Aufbrechvorgang und vor dem Trocknungsschritt mindestens eine Polycarbonsäure, die aus linearen oder verzweigten, gesättigten oder ungesättigten, aliphatischen Polycarbonsäuren mit 2 bis 20 Kohlenstoffatomen oder aromatischen Polycarbonsäuren ausgewählt wird, zusetzt.

4. Verfahren nach Anspruch 3, bei dem im Lauf des Aufbrechvorgangs mindestens eine Polycarbonsäure zu dem Filterkuchen gegeben wird.

5. Verfahren nach Anspruch 3, bei dem nach dem Aufbrechvorgang mindestens eine Polycarbonsäure zu dem Filterkuchen gegeben wird.

6. Verfahren nach Anspruch 3, bei dem der Aufbrechvorgang das Zugeben mindestens einer Aluminiumverbindung umfasst.

7. Verfahren nach Anspruch 6, bei dem im Lauf des Aufbrechvorgangs mindestens eine Polycarbonsäure und mindestens eine Aluminiumverbindung gleichzeitig zu dem Filterkuchen gegeben werden.

8. Verfahren nach Anspruch 6, bei dem im Lauf des Aufbrechvorgangs vor der Zugabe mindestens einer Polycarbonsäure mindestens eine Aluminiumverbindung zu dem Filterkuchen gegeben wird.

9. Verfahren nach einem der Ansprüche 3 bis 8, bei dem man eine Mischung von Polycarbonsäuren zu dem Filterkuchen gibt.

10. Verfahren nach Anspruch 9, bei dem die Mischung von Polycarbonsäuren die folgenden Säuren umfasst: Adipinsäure, Glutarsäure und Bernsteinsäure.

**11.** Verfahren nach Anspruch 9, bei dem die Mischung von Polycarbonsäuren die folgenden Säuren umfasst: Methylglutarsäure, Ethylbernsteinsäure und Adipinsäure.

**12.** Verwendung einer Fällungskieselsäure nach Anspruch 1 oder 2 oder einer durch das Verfahren nach einem der Ansprüche 3 bis 11 erhaltenen Fällungskieselsäure als verstärkender Füllstoff für Polymere, insbesondere für Reifen.

**13.** Polymerzusammensetzung, umfassend eine Fällungskieselsäure nach Anspruch 1 oder 2 oder einer durch das Verfahren nach einem der Ansprüche 3 bis 11 erhaltene Fällungskieselsäure.

**14.** Artikel, umfassend mindestens eine Zusammensetzung nach Anspruch 13, wobei dieser Artikel aus einer Schuhsohle, einem Bodenbelag, einer Gasbarriere, einem flammfesten Material, einer Rolle für Seilbahnen, einer Dichtung für Haushaltselektrogeräte, einer Dichtung für Flüssigkeits- oder Gasleitungen, einer Bremssystemdichtung, einem Rohr, einer Ummantelung, einem Kabel, einer Motoraufhängung, einem Batterieseparator, einem Förderband, einem Treibriemen oder vorzugsweise einem Reifen besteht.

**Claims**

**1.** Precipitated silica, **characterized in that** it has:

- a CTAB specific surface area of between 175 and 250 $m^2/g$,
- a content C of polycarboxylic acid + corresponding carboxylate, expressed as total carbon, of at least 0.15% by weight, in particular of at least 0.20% by weight,
- a pore distribution such that the pore volume constituted by the pores, the diameter of which is between 175 and 275 Å, represents less than 50% of the pore volume constituted by the pores with diameters of less than or equal to 400 Å and
- a pore volume $V_{d1}$, constituted by the pores with a diameter of less than 1 $\mu$m, of at least 1.50 $cm^3/g$, and **characterized in that** said polycarboxylic acid is chosen from linear or branched, saturated or unsaturated, aliphatic polycarboxylic acids containing from 2 to 20 carbon atoms or aromatic polycarboxylic acids.

**2.** Precipitated silica according to Claim 1, **characterized in that** it has:

- an aluminium (Al) content of at least 0.20% by weight, in particular of at least 0.25% by weight.

**3.** Process for producing a precipitated silica according to Claim 1 or 2, said process being of the type comprising the precipitation reaction between a silicate and an acidifying agent, as a result of which a suspension of precipitated silica is obtained, **characterized in that** it comprises the following steps:

- the precipitation reaction is carried out in the following way:

(i) an initial vessel heel comprising at least one portion of the total amount of the silicate used in the reaction and an electrolyte is formed, the concentration of silicate, expressed as $SiO_2$, in said initial vessel heel being between 50 and 70 g/l,
(ii) the acidifying agent is added to said vessel heel until a value of the pH of the reaction medium of between 7.0 and 8.5 is obtained,
(iii) the acidifying agent and, where appropriate, the remaining amount of the silicate are simultaneously added to the reaction medium,

- the separation comprises filtration and washing by means of a filter equipped with a compacting means,
- the filtration cake obtained at the end of the filtration is subjected to a disintegrating operation,
- a suspension, preferably having a solids content of at most 23%, is spray-dried,
said process being **characterized in that** at least one polycarboxylic acid preferably chosen from linear or branched, saturated or unsaturated, aliphatic polycarboxylic acids containing from 2 to 20 carbon atoms or aromatic polycarboxylic acids is added to the filtration cake, either during the disintegrating operation, or after the disintegrating operation and before the drying step.

**4.** Process according to Claim 3, in which, during the disintegrating operation, at least one polycarboxylic acid is added to the filtration cake.

5. Process according to Claim 3, in which at least one polycarboxylic acid is added to the filtration cake after the disintegrating operation.

6. Process according to Claim 3, in which the disintegrating operation comprises the addition of at least one aluminium compound.

7. Process according to Claim 6, in which, during the disintegrating operation, at least one polycarboxylic acid and at least one aluminium compound are simultaneously added to the filtration cake.

8. Process according to Claim 6, in which, during the disintegrating operation, at least one aluminium compound is added to the filtration cake prior to the addition of at least one polycarboxylic acid.

9. Process according to one of Claims 3 to 8, in which a mixture of polycarboxylic acids is added to the filtration cake.

10. Process according to Claim 9, in which the mixture of polycarboxylic acids comprises the following acids: adipic acid, glutaric acid and succinic acid.

11. Process according to Claim 9, in which the mixture of polycarboxylic acids comprises the following acids: methylglutaric acid, ethylsuccinic acid and adipic acid.

12. Use as a reinforcing filler for polymers, in particular for tyres, of a precipitated silica according to Claim 1 or 2 or obtained by means of the process according to one of Claims 3 to 11.

13. Composition of polymers comprising a precipitated silica according to Claim 1 or 2 obtained by means of the process according to one of Claims 3 to 11.

14. Article comprising at least one composition according to Claim 13, this article consisting of a shoe sole, a floor covering, a gas barrier, a flame-retardant material, a cable car roller, a seal for domestic electrical appliances, a seal for liquid or gas pipes, a braking system seal, a pipe, a sheathing, a cable, an engine support, a battery separator, a conveyor belt, a transmission belt, or, preferably, a tyre.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2886285 A1
- EP 520862 A1

**Littérature non-brevet citée dans la description**

- *The Journal of the American Chemical Society,* Février 1938, vol. 60, 309
- **DORRIS ; GRAY.** *J. Colloid Interface Sci.,* vol. 77 (180), 353-362